Europäisches Patentamt

European Patent Office

Office européen des brevets

(11) Veröffentlichungsnummer: **0 171 545**
**B1**

(12) **EUROPÄISCHE PATENTSCHRIFT**

(19)

(45) Veröffentlichungstag der Patentschrift:
08.02.89

(21) Anmeldenummer: 85107548.1

(22) Anmeldetag: 19.06.85

(51) Int. Cl.⁴: **E 06 B 1/60**

(54) Ausgleichskeil zur Distanzüberbrückung im Bau.

(30) Priorität: 12.07.84 DE 3425664

(43) Veröffentlichungstag der Anmeldung:
19.02.86 Patentblatt 86/8

(45) Bekanntmachung des Hinweises auf die Patenterteilung:
08.02.89 Patentblatt 89/6

(84) Benannte Vertragsstaaten:
AT BE CH FR GB LI NL

(56) Entgegenhaltungen:
EP-A- 0 127 021
DE-A- 1 683 548
DE-A- 2 347 266
FR-A- 2 210 201
US-A- 2 278 708
US-A- 2 772 596
US-A- 4 232 068

(73) Patentinhaber: Niemann, Hans-Dieter, Am Hügel 17,
D-5014 Kerpen-Horrem (DE)

(72) Erfinder: Niemann, Hans-Dieter, Am Hügel 17,
D-5014 Kerpen-Horrem (DE)

(74) Vertreter: Sturies, Herbert et al, Patentanwälte Dr. Ing.
Dipl. Phys. Herbert Sturies Dipl. Ing. Peter Eichler
Postfach 20 12 42, D-5600 Wuppertal 2 (DE)

## Beschreibung

Die Erfindung bezieht sich auf eine Ausgleichsvorrichtung zur Distanzüberbrückung im Bau, bestehend aus einem Ausgleichskeil aus Spritzkunststoff, mit zwei unter dem Keilwinkel angeordneten Keilflächen, die von einem Längsschlitz durchbrochen sind, der sich über mindestens die Hälfte der Keillänge erstreckt und eine am spitzen Ende des Keils anzuordnende Befestigungsschraube umgibt.

Eine Vorrichtung mit einem Keil dieser Art ist aus dem DE-GM 79 21 065 bekannt. Der Keil wird dort zusammen mit einem anderen gleich ausgebildeten Ausgleichskeil derart verwendet, dass die übereinander gelegten und in Längsrichtung gegeneinander verschiebbaren Keile parallele Aussenanlageflächen mit entsprechend der Relativlage der Keile unterschiedlichen Abständen bilden. Beide Keile werden gemeinsam mit einem Befestigungsmittel z. B. an einer Wand befestigt, wobei das Befestigungsmittel beispielsweise eine Schraube ist, die durch den Längsschlitz gesteckt und in die Wand eingeschraubt wird. Hierbei müssen die Keile während des Eindrehens der Schraube in der gewünschten, die Distanz überbrückenden Lage gehalten werden. Dabei kann es leicht zu Fehleinstellungen kommen, wenn z. B. ein Fensterrahmen in eine Maueröffnung eingesetzt werden soll und die Befestigungsschraube zweier einander gegenüberliegender Befestigungsstellen unterschiedlich tief eingedreht werden. Es ist dann eine doppelte Korrektur notwendig, bei der die Keile erneut in der gewünschten Weise angeordnet werden müssen.

Aus der US-PS 2 772 596 sind Ausgleichskeile zur Sturz- und Nachlaufeinstellung bei Automobilen bekannt, die zur Schaffung einander paralleler Anlageflächen für einzustellende Radlenkerbauteile paarweise verwendet werden, wobei ein Ausgleichskeil am spitzen Ende offen ist und auf einen der Befestigung dienenden Schraubbolzen geschoben ist. Dieser kommt dabei regelmässig in der Nähe des nicht offenen Schlitzendes zu liegen und seine Keilschenkel haben keine Vorsprünge, die den Längsschlitz in seiner Öffnungsweite begrenzen. Infolgedessen ist der bekannte ausgleichskeil bzw. das bekannte Ausgleichskeilpaar nicht für den Bau geeignet.

Aus der US-PS 2 278 708 ist eine Klemmscheibe für eine Kupplung von hydraulischen Bremsschläuchen bekannt, deren Einbau jedoch eine ziemlich eng begrenzte Distanz zwischen den beiden, durch die Scheibe zu beaufschlagenden Bauteilen voraussetzt. Die Scheibe ist infolgedessen nicht für den Bau geeignet und die bei ihr vorhandenen, die Öffnungsweite des Scheibenschlitzes begrenzenden Vorsprünge sind auf einen Leitungsverbindungsnippel abgestimmt, dessen Toleranzen praktisch vernachlässigbar sind.

Der Erfindung liegt die Aufgabe zugrunde, einen Keil der eingangs genannten Art so zu verbessern, dass er ohne die Gefahr eines Herunterfallens von der Befestigungsschraube während der Befestigung eines Bauteils eingesetzt werden kann.

Diese Aufgabe wird dadurch gelöst, dass der Längsschlitz am spitzen Ende des Keils offen ist und dort die Keilschenkel Vorsprünge aufweisen, die den Längsschlitz zumindest auf eine den Durchmesser der Befestigungsschraube unterschreitende Öffnungsweite begrenzen, und dass der Ausgleichskeil eine derartige Elastizität aufweist, dass er unter elastischer Aufweitung seiner Keilschenkel über die Befestigungsschraube schiebbar ist.

Für die Erfindung ist von Bedeutung, dass der Keil trotz seines sich über die wesentliche Keillänge erstreckenden Längsschlitzes an einem Ende offen ist. Er kann infolgedessen auch dann noch über ein Befestigungsmittel eines Bauteils geschoben werden, wenn das Bauteil die gewünschte Lage eingenommen hat und in dieser Lage befestigt ist. Bei dieser Verwendung des Ausgleichskeils wird das spitze Ende des Keils über das z. B. als Befestigungsschraube ausgebildete Befestigungsmittel aufgeschoben, wobei sich die Öffnungsweite vergrössert und nach dem Überschieben des Keils bei im Längsschlitz angeordneten Befestigungsmittel infolge der Elastizität der beiden Schenkel des Keils wieder auf das Ursprungsmass verringert. Der auf diese Weise aufgeschobene Keil kann in die erwünschte Überbrückungsstellung gebracht werden, ohne dass dabei die Gefahr besteht, dass er von dem Befestigungsmittel versehentlich wieder herunterfällt, denn die Öffnungsweite ist so gering bemessen, dass der Keil nicht ohne Absicht wieder entfernt werden kann. Diese Entfernung ist jedoch leicht möglich, wenn sie gewünscht wird. Dazu ist es auch nicht erforderlich, das Befestigungsmittel wieder herauszudrehen. Es genügt vielmehr das einfache Abziehen des Ausgleichskeils. Der Ausgleichskeil kann daher entschieden besser verwendet werden, ohne dabei in unerwünschter Weise Einfluss auf den Einbau und das Justieren des einzubauenden Bauteils zu nehmen.

Diese Vorsprünge sind jeweils einstückig mit den Keilschenkeln und beeinflussen deren Festigkeits- bzw. Elastizitätsverhalten nicht. In diesem Sinne und zur einfachen Anwendung ohne Rücksichtnahme auf eine spezielle Formgebung ist das spitze Keilende mit seinen die Öffnungsweite begrenzenden Vorsprüngen symmetrisch ausgebildet.

Die Vorsprünge sind unter Bildung eines Einlauftrichters von der Keilspitze zurückversetzt angeordnet, wodurch die erforderliche Materialstärke gewährleistet ist, wie auch das einfache Ansetzen eines Keils an dem Befestigungsmittel beim Aufschieben, so dass die Keilspitze also nicht abrutschen kann und die Keilschenkel auch bei schiefer Keilführung an unzugänglicher Stelle ohne abzurutschen gespreizt werden können. Die schlitzseitigen Kanten der Vorsprünge sind abgerundet, um das Abziehen eines Keils vom Befestigungsmittel zu erleichtern.

Bei einem Ausgleichskeil, bei dem auf einer Keilfläche ein Steg und darunter an der anderen Keilfläche eine passend profilierte Nut ausgebildet ist, sind der Steg und die Nut jeweils zwischen der benachbarten Aussenkante und der benachbarten Schlitzkante der zugehörigen Keilfläche angeordnet. Bei einer solchen Nut/Steg-Anordnung rutschen die Keile bei einer Längsverschiebung zweier Keile aneinander nicht so leicht voneinander ab, und es ergibt sich eine bessere Verteilung der Masse um einen Schwerpunkt, wodurch die Keile problemlos zu spritzen sind.

Des weiteren sind der Steg und die Nut oder dementsprechende Eingriffsteile jeweils ineinanderpassend hinterschnitten. Die Hinterschneidung bewirkt, dass zusammengeschobene Keile, die durch ihre Stege und Nuten gegen gegenseitiges Verdrehen geschützt sind, nicht versehentlich voneinander abgehoben und dann verdreht werden können, z. B. an einer unzugänglichen Stelle.

Auf den Keilflächen sind quer zu den Stegen oder Nuten angeordnete flachere Rippen vorhanden, die ein ungewolltes Verrutschen zweier aufeinanderliegender Keile in ihrer Längsrichtung erschweren, ohne die Längsverschiebung im Prinzip zu behindern, wobei die Längsführung durch die höheren bzw. tieferen Stege bzw. Nuten gewährleistet bleibt.

Die Erfindung wird anhand von in der Zeichnung dargestellten Ausführungsbeispielen erläutert. Es zeigt:

Fig. 1 eine Aufsicht auf eine Keilfläche eines Ausgleichskeils,

Fig. 2 den Schnitt II–II gemäss Fig. 1,

Fig. 3, 4 im Querschnitt unterschiedlich gestaltete Keilprofile gemäss Schnitt III–IV,

Fig. 5 den Einbau eines Ausgleichskeils zwischen die Aussenumfangsfläche eines Fensterrahmens und die Leibung eines Mauerwerks und

Fig. 6 eine schematische Darstellung zweier Ausgleichskeile, die z. B. statt des einzelnen Ausgleichskeils der Fig. 5 bei diesem Einbaubeispiel vertikal zur Darstellungsebene eingesetzt werden könnten.

Der Ausgleichskeil 10 hat zwei unter einem Keilwinkel angeordnete Keilflächen 11, 11' und einen Längsschlitz 12, der beide Keilflächen 11, 11' durchbricht, so dass zwischen den Keilschenkeln 14 z. B. eine Befestigungsschraube 13 angeordnet werden kann. Der Längsschlitz 12 erstreckt sich praktisch über die gesamte Länge des Ausgleichskeils 10, um den Keil 10 über seine gesamte Länge zur Distanzüberbrückung nutzen zu können, wobei die Befestigungsschraube 13 z. B. in der Nähe des linken spitzen Endes 15, aber auch am rechten stärkeren Ende 16 angeordnet werden kann.

Der Längsschlitz 12 ist linksseitig offen, das heisst, die beiden Keilschenkel 14 sind am spitzen Keilende 15 nicht miteinander verbunden. Die sich dabei ergebende Öffnung 17 hat eine geringe Öffnungsweite 18, welche durch die beiden Vorsprünge 19 jeweils eines Keilschenkels 14 bestimmt wird. Die Öffnungsweite 18 kann dabei so gering gewählt werden, dass auch dünne Befestigungsschrauben 13 nicht ungewollt aus dem Längsschlitz 12 heraustreten können. Im Extremfall, also bei sehr langen freien Keilschenkeln 14, die besonders elastisch sind, kann die Öffnungsweite 18 auch null sein bzw. es kann eine Überlappung der Vorsprünge 19 vorliegen, um ein ungewolltes Herausrutschen der Befestigungsschraube 13 aus dem Längsschlitz 12 zu erschweren. Andererseits wird das Überschieben der Keilschenkel 14 auf die Befestigungsschraube 13 bei entsprechender Elastizität nicht behindert.

Die Vorsprünge 19 sind von der Keilspitze 20 zurückversetzt. Dadurch wird ein Einlauftrichter 21 gebildet, der es erleichtert, den Ausgleichskeil 10 beim Aufschieben auf die Befestigungsschraube 13 an dieser anzusetzen, insbesondere wenn die Befestigungsschraube 13 bereits an unzugänglicher Stelle angebracht ist. Durch die Abflachung des Einlauftrichters 21 wird auch das Auseinanderbiegen der Keilschenkel 14 beim Aufschieben begünstigt, so dass ein leichteres Aufschnappen möglich wird. Analog sind die schlitzseitigen Kanten 22 der Vorsprünge 19 angerundet, damit das Auseinanderbiegen der Keilschenkel 14 bei einem eventuellen Abziehen des Keils 10 von der Befestigungsschraube 13 erleichtert wird.

An seinem dicken Ende 16 ist der Ausgleichskeil 10 zur Gewichtsersparnis ausgespart. In der Aussparung 24 können bedarfsweise Versteifungsrippen angeordnet sein.

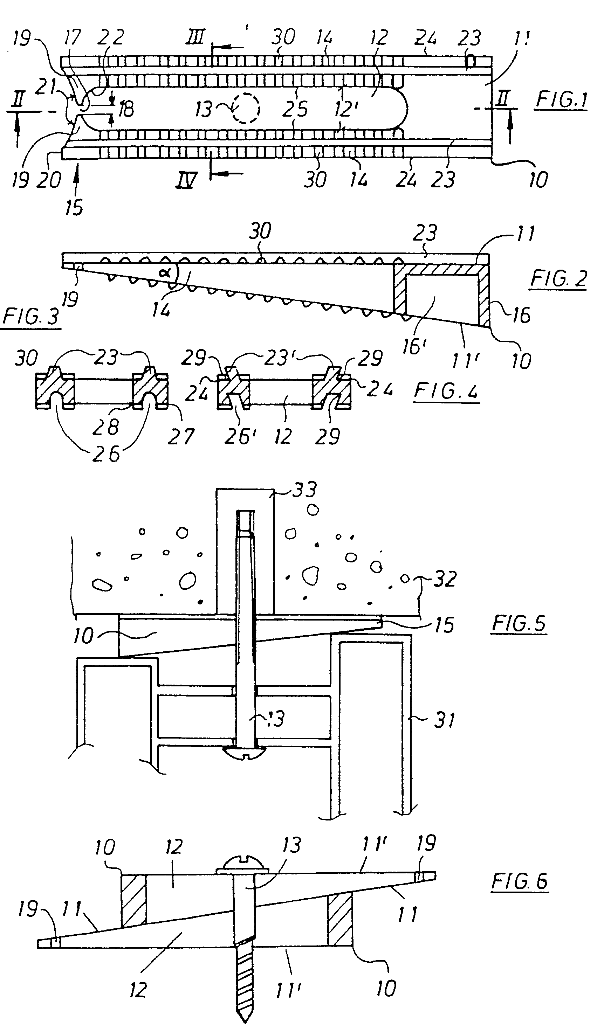

Auf der oberen Keilfläche 11 sind Stege 23 angeordnet, die von der Keilspitze 20 bis zum Keilende 16 durchlaufen und zwischen den Oberkanten 24 des Keils 10 und den Schlitzoberkanten 25 mittig angeordnet sind. Gemäss Fig. 3 befinden sich unter den Stegen 23 in der unteren Keilfläche 11' Nuten 26, die in nicht dargestellter Weise ebenfalls zwischen der Keilspitze 20 und dem Ende 16 durchlaufen. Diese Nuten 26 sind mittig zwischen der unteren Aussenkante 27 und der unteren Schlitzkante 28 angeordnet. Bei Aufeinandersetzen zweier Keile greifen die Stege 23 des unteren Keils in die Nuten 26 eines oberen Keils und bewirken so eine Längsführung beider Keile, die bei einem solchen Ineinandergreifen nicht zueinander verdreht werden können. Das erleichtert den Einbau zweier Keile 10 z. B. gemäss Fig. 6, die mit ihren gemäss Fig. 1 oberen Keilflächen 11 aufeinandergelegt werden, so dass die gemäss Fig. 2 unteren Keilflächen 11' einander parallel sind. Relativverschiebungen der beiden Teile 10 der Fig. 6 bewirken Abstandsänderungen der beiden Keilflächen 11' und eine dementsprechend grössere oder kleinere Distanzüberbrückung.

In gewissen Einbaufällen kann es von Vorteil sein, dass zwei Distanzkeile 10 nicht nur gegen Verdrehen gesichert sind, sondern auch gegen Abheben. Zu diesem Zweck können an den Stegen 23' und an den Nuten 26' Hinterschneidungen 29 angeordnet sein, die ein Auseinanderziehen zweier Ausgleichskeile quer zu ihrer Längsrichtung verhindern bzw. erschweren. Bei dem Keil der Fig. 4 besitzen die Stege 23' und die Nuten 26' jeweils einen vom Längsschlitz 12 zu den Oberkanten 24 geneigten parallelogrammförmigen Querschnitt. Dieser ist für kurze und flache Keile am problemlosesten herzustellen und einzusetzen. Es versteht sich jedoch, dass z. B. auch L-förmige oder pilzkopfförmige Stege und Nuten verwendet werden können. Die Eingriffsteile können auch eine von über die gesamte Keillänge durchlaufenden Stegen oder Nuten abweichende Gestaltung erfahren, z. B. nur abschnittsweise in Längsrichtung erfolgende Erstreckung oder in Sonderfällen auch punktweise bzw. rasterpunktweise ausgestaltet sein. Letztlich können die Stege 23, 23' und die Nuten 26, 26' bzw. entsprechende Elemente auch vertauscht werden, so dass sich auf der oberen Keilfläche 11 eine glattere grössere Auflagefläche z. B. für Glas ergibt. Beim Zusammenbau zweier Ausgleichskeile 10 gemäss Fig. 5 bildet die die Nuten 26, 26' aufweisende Keilfläche 11 oder 11' eines Keils stets die grössere Auflagefläche.

Im Bereich des Längsschlitzes 12 sind beidseitig der Stege 23 und der Nuten 26 quer zu letzteren angeordnete Rippen 30 vorhanden, die gemäss Fig. 2 flacher als die Stege 23 hoch sind. Diese Rippen 30 ermöglichen es, zwei Keile 10 in definierter Lage zueinander ohne Möglichkeit zum Längsverrutschen zu halten. Sie können sich auch an einem Bauteil oder an einer Mauer abstützen und so die Gefahr des Verrutschens verringern. Die Rippen 30 erstrecken sich nur über die von den Stegen 23 bzw. Nuten 26 nicht eingenommene Breite der Keilschenkel 14.

In Fig. 5 soll ein Fensterrahmen 31 in eine definierte Lage zur vom Mauerwerk 32 gebildeten Fensterleibung gebracht werden. Die Befestigung des Fensterrahmens 31 am Mauerwerk 32 erfolgt mit einem Dübel 33, in den die Befestigungsschraube 13 soweit eingedreht wird, dass der Fensterrahmen 31 die gewünschte Lage hat. Danach wird die zwischen dem Fensterrahmen 31 und dem Mauerwerk 32 vorhandene Distanz durch einen Ausgleichskeil 10 überbrückt, der mit seinem spitzen Ende 15 über die Befestigungsschraube 13 geschoben wird, bis er den dargestellten Sitz erreicht. Der Ausgleichskeil 10 kann fest eingetrieben werden bzw. die Befestigungsschraube 13 wird nachgezogen.

Der Ausgleichskeil 10 besteht aus Spritzkunststoff, z. B. einem Polypropylen, das den Elastizitätsanforderungen genügt, z. B. beim Aufschieben der Keilspitze 15 auf die Befestigungsschraube 13, das aber auch den Festigkeitsanforderungen genügt, z. B. beim Eintreiben des Keils 10 gemäss Fig. 5.

## Patentansprüche

1. Ausgleichsvorrichtung zur Distanzüberbrückung im Bau, bestehend aus einem Ausgleichskeil (10) aus Spritzkunststoff, mit zwei unter dem Keilwinkel angeordneten Keilflächen (11, 11'), die von einem Längsschlitz (12), durchbrochen sind, der sich über mindestens die Hälfte der Keillänge erstreckt und eine auch am spitzen Ende des Keils anzuordnende Befestigungsschraube (13) umgibt, dadurch gekennzeichnet, dass der Längsschlitz (12) am spitzen Ende (15) des Keils offen ist und dort die Keilschenkel (14) Vorsprünge (19) aufweisen, die den Längsschlitz (12) zumindest auf eine den Durchmesser der Befestigungsschraube (13) unterschreitende Öffnungsweite (18) begrenzen, und dass der Ausgleichskeil (10) eine derartige Elastizität aufweist, dass er unter elastischer Aufweitung seiner Keilschenkel (14) über die Befestigungsschraube (13) schiebbar ist.

2. Vorrichtung nach Anspruch 1, dadurch gekennzeichnet, dass das spitze Keilende (15) mit seinen die Öffnungsweite (18) begrenzenden Vorsprüngen (19) symmetrisch ausgebildet ist.

3. Vorrichtung nach Anspruch 1 oder 2, dadurch gekennzeichnet, dass die Vorspünge (19) unter Bildung eines Einlauftrichters (21) von der Keilspitze (20) zurückversetzt angeordnet sind.

4. Vorrichtung nach einem der Ansprüche 1 bis 3, dadurch gekennzeichnet, dass die schlitzseitigen Kanten (22) der Vorsprünge (19) abgerundet sind.

5. Vorrichtung nach einem der Ansprüche 1 bis 4, bei dem auf einer Keilfläche ein Steg und darunter in der anderen Keilfläche eine passend profilierte Nut ausgebildet ist, dadurch gekennzeichnet, dass der Steg (23, 23') und die Nut (26, 26') jeweils zwischen der benachbarten Aussenkante (25, 28) der zugehörigen Keilfläche (11, 11') angeordnet sind.

6. Vorrichtung nach einem der Ansprüche 1 bis 5, dadurch gekennzeichnet, dass der Steg (23') und die Nut (26') oder dementsprechende Eingriffsteile jeweils ineinanderpassend hinterschnitten sind.

7. Vorrichtung nach einem der Ansprüche 1 bis 6, dadurch gekennzeichnet, dass auf den Keilflächen (11, 11') quer zu den Stegen (23, 23') oder Nuten (26, 26') angeordnete flachere Rippen (30) vorhanden sind.

## Claims

1. Compensation device for bridging space in structures, comprising a compensation wedge (10) of resilient plastics material having two wedging faces (11, 11') arranged at the wedge angle and each split by an elongate slot (12) which extends over at least half the length of the wedge and which encompasses a fixing screw (13) to be disposed at the tapered end of the wedge, characterised in that the elongate slot (12) is open at the tapered end (15) of the wedge and there the wedge legs (14) have protuberances (19) which define the elongate slot (12) at least with an aperture width (18) which is less than the diameter of the fixing screw (13), and in that the compensation wedge (10) has such elasticity that it is displaceable past the fixing screw (13) by elastic separation of its wedge legs (14).

2. Device according to claim 1, characterised in that the tapered wedge end (15) is formed symmetrically with its rotuberances (19) defining the aperture width (18).

3. Device according to claim 1 or 2, characterised in that the protuberances (19) are arranged set back from the wedge tip (20), thereby to define an entry funnel (21).

4. Device according to one of claims 1 to 3, characterised in that the slot-side edges (22) of the protuberances (19) are rounded.

5. Device according to one of claims 1 to 4, in which a rib is formed on one wedging face and a matching profiled groove is formed below it in the other wedging face, characterised in that the ribs (23, 23') and the grooves (26, 26') are positioned between the adjacent outer edges (24, 27) and the adjacent slot edges (25, 28) of the associated wedging faces (11, 11').

6. Device according to one of claims 1 to 5, characterised in that the ribs (23') and the grooves (26') or corresponding gripping elements are undercut for matching engagement in one another.

7. Device according to one of claims 1 to 6, characterised in that teeth (30) flatter than the ribs are provided on the wedging faces (11, 11') and extend transversely to the ribs (23, 23') or grooves (26, 26').

## Revendications

1. Dispositif de compensation pour combler des intervalles dans le bâtiment, constitueé par une cale de compensation en matière plastique moulée par injection (10), comportant deux faces de cale (11, 11') disposées selon l'angle de coin et traversées par une fente longitudinale (12) qui s'étend sur au moins la moitié de la longueur de la cale et entoure une vis de fixation (13) devent être disposée à l'extrémité pointue (15) de la cale, caractérisé en ce que la fente longitudinale (12) est ouverte à l'extrémité pointue (15) de la cale où les branches de cale (14) présentent des saillies (19) qui limitent la fente longitudinale (12) tout au moins sur une largeur d'ouverture (18) inférieure au diamètre de la vis de fixation (13), et en ce que la cale de compensation (10) présente une élasticité telle qu'elle peut être déplacée sur la vis de fixation (13) sous l'effet d'un élargissement élastique de ses branches (14).

2. Dispositif selon la revendication 1, caractérisé en ce que l'extrémité de cale pointue (15) est constituée symétriquement avec ses saillies (19) délimitant la largeur d'ouverture (18).

3. Dispositif selon la revendication 1 ou 2, caractérisé en ce que les saillies (19) sont disposées en formant un entonnoir d'entrée (21) en retrait de la pointe de cale (20).

4. Dispositif selon l'une des revendications 1 à 3, caractérisé en ce que les bord (22) des saillies (19) du côté fente sont arrondis.

5. Dispositif selon l'une des revendications 1 à 4 comportant, sur une face de cale, une nervure et, au-dessous de celle-ci, sur l'autre face de cale, une rainure profilée adaptée, caractérisé en ce que la nervure (23, 23') et la rainure (26, 26') sont respectivement disposées entre le bord extérieur voisin (24, 27) et le bord de fente voisin (25, 28) de la face de cale (11, 11') correspondante.

6. Dispositif selon l'une des revendications 1 à 5, caractérisé en ce que la nervure (23') et la rainure (26') ou des parties d'accouplement correspondantes sont respectivement découpées de manière à s'emboîter.

7. Dispositif selon l'une des revendications 1 à 6, caractérisé en ce que des nervures (30) plus aplaties disposées transversalement aux nervures (23, 23') ou aux rainures (26, 26') sont prévues sur les faces de cale (11, 11').

FIG.1

FIG.2

FIG.3

FIG.4

FIG.5

FIG.6